**Europäisches Patentamt**

**European Patent Office**

**Office européen des brevets**

(19)

(11) Veröffentlichungsnummer: **0 051 256**
A2

(12) # EUROPÄISCHE PATENTANMELDUNG

(21) Anmeldenummer: 81109034.9

(22) Anmeldetag: 27.10.81

(51) Int. Cl.³: **C 04 B 31/30**
C 08 J 5/06, D 06 M 11/12
D 06 M 13/50

(30) Priorität: 04.11.80 DE 3041595

(43) Veröffentlichungstag der Anmeldung:
12.05.82 Patentblatt 82/19

(84) Benannte Vertragsstaaten:
AT BE CH DE FR GB IT LI LU NL SE

(71) Anmelder: Füssener Textil AG

D-8958 Füssen/Ostallgäu(DE)

(72) Erfinder: Stüber, Siegfried, Dr.
Drehergasse 46
D-8958 Füssen(DE)

(74) Vertreter: Berg, Wilhelm, Dr. et al,
Dr. Berg, Dipl.-Ing. Stapf, Dipl.-Ing. Schwabe, Dr. Dr.
Sandmair Mauerkircherstrasse 45
D-8000 München 80(DE)

(54) Verstärkungs- oder Armierungsmaterial, Verfahren zur Herstellung eines solchen Materials und dessen Verwendung.

(57) Die Erfindung betrifft ein organisches Verstärkungs- und Armierungsmaterial auf Polyalkylengrundlage, die durch einen Gehalt an organischen und/oder anorganischen oder anorganisch-organischen Si-VI-Verbindungen modifiziert ist, ein Verfahren zu seiner Herstellung und seine Verwendung.

EP 0 051 256 A2

- 1 -

Beschreibung:

Gegenstand der vorliegenden Erfindung ist ein organisches Verstärkungs- und Armierungsmaterial auf Polyalkylen-Grundlage, ein Verfahren zur Herstellung eines solchen Materials sowie dessen Verwendung.

Verstärkungs- und Armierungsmaterialien werden als kaum noch wegzudenkende Hilfsstoffe in weiten Bereichen der Technik benutzt. Beispiele hierfür sind das Gebiet der Kunststoffe mit Verstärkerharzen, insbesondere faserverstärkten Kunststoffen oder das Gebiet der Kautschuktechnik, wo Gewebeeinlagen und Rußverstärker auf dem Reifensektor eine ganz entscheidende Rolle spielen. Weiter sei auf das Gebiet der Baustoffe verwiesen, wo bei Beton und Betonformteilen Armierungen bzw. Bewehrungen mit Eisen oder Asbestfasern ganz selbstverständlich geworden sind.

Von wesentlicher Bedeutung für eine gute Verstärkung, bzw. Armierung ist eine gute Benetzbarkeit des Verstärkers und

(089) 98 82 72
98 82 73
98 82 74
98 33 10

Telegramme:
BERGSTAPFPATENT München
TELEX:
0524560 BERG d

Bankkonten: Hypo-Bank München 4410122850
(BLZ 700 200 11) Swift Code: HYPO DE MM
Bayer. Vereinsbank München 453100 (BLZ 700 202 70)

eine möglichst feste Bindung zwischen Verstärker und der
Matrix im Endzustand. Die Verwendung üblicher Benetzungsmittel, welche die Oberflächenspannung der flüssigen Matrix
gegenüber dem festen Verstärkermaterial zwar erniedrigt,
ist bisweilen problematisch, da die auf dem Verstärker
angeordnete Schicht nach Erstarren der Matrix bisweilen
Gleitmittel-ähnliche Wirkung zeigt. Es können demzufolge
die Forderungen nach einer guten Benetzung, was insbesondere bei faserförmigem Verstärkermaterial zur Vermeidung
von Klumpenbildung in der Matrix von Bedeutung ist, gegenläufig sein mit der Forderung einer festen Bindung zwischen
Matrix und Verstärkermaterial.

Der vorliegenden Erfindung liegt nun die Aufgabe zugrunde,
ein Verstärkungs- bzw. Armierungsmaterial zur Verfügung zu
stellen, welches einerseits leicht benetzbar ist, also,
auch in Faserform, zu Klumpenbildung keinen Anlaß gibt,
andererseits aber eine feste Bindung zwischen Verstärkermaterial und Matrix gewährleistet.

Die Aufgabe wird bei einem organischen Verstärkungs- und
Armierungsmaterial auf Polyalkylengrundlage erfindungsgemäß
dadurch gelöst, daß das Polyalkylenmaterial durch einen
Gehalt an organischen und/oder anorganischen oder anorganisch-organischen Si-IV-Verbindungen modifiziert ist.
Durch eine derartige, zumindest an der Oberfläche gegebene
Modifizierung wird einerseits für eine einwandfreie Benetzung, andererseits aber auch für die Möglichkeit einer
festen Bindung zwischen Matrix und dem Verstärkermaterial
Sorge getragen. Beispiele für organische Si-IV-Verbindungen
sind Verbindungen, welche direkte Silizium-Kohlenstoff-
Bindungen enthalten, z.B. Silicone, Siloxane, Silazane
und Organosilane, ferner Kieselsäureester einschließlich
Polykieselsäureester und deren Derivate. Der Gehalt an
Siliziumverbindung beträgt im allgemeinen bis zu 5 Gew.%,
bezogen auf das Gesamtgewicht des modifizierten Materials,
wobei dieser Wert ohne weiteres überschritten werden kann.
Meist sind Gehalte im Bereich von 1 - 3 Gew.% bevorzugt.
Bei Untersuchungen hat sich gezeigt, daß bei Versuchen bis
zu etwa 70 % der an der Oberfläche liegenden Alkyleneinnheiten umgesetzt wurden. Auch hier ist dies kein fester
Grenzwert.

Das Polyalkylenmaterial kann dabei in unterschiedlichsten
Formen, beispielsweise in Form von Pulvern, Granulaten,
Spänen, Schnitzeln, Fäden, Garnen, Fasern, Endlosfasern,
Flächengebilden, Vliesen und dergleichen vorliegen, wobei die Verwendung in Form von Fasern, namentlich Stapelfasern, besonders bevorzugt ist.

Gemäß einer Ausführungsform der Erfindung ist das Polyalkylenmaterial durch Behandlung mit reaktiven Siliziumverbindungen zumindest an seiner Oberfläche modifiziert. Dabei
ist die Modifizierung bevorzugt mit Derivaten von gemischten Kieselsäureanhydriden, insbesondere von Kieselsäureanhydriden mit anorganischen Säuren, vorzugsweise mit
Derivaten von Siliziumhalogeniden erfolgt. Beispiele der
zur Modifizierung benutzten Behandlungsmittel sind insbesondere Verbindungen wie $SiCl_4$ und Organohalogensilane
der allgemeinen Formel $R_nSiX_{4-n}$, worin R ein aliphatischer,
aromatischer und/oder heterocyclischer Rest und X Halogen,
vorzugsweise Chlor ist. Als aliphatische Reste kommen vor
allem geradkettige, gegebenenfalls halogensubstituierte
niedrige Alkylreste mit bis zu etwa 6 Kohlenstoffatomen,
insbesondere Methyl- und/oder Äthylgruppen und ungesättigte
Gruppen, wie Vinylgruppen, als aromatische Reste vor allem
Phenylreste, die gegebenenfalls halogen- und/oder niedrigalkyl-substituiert sein können und als heterocyclische
Reste vor allem 5- und 6-gliedrige Ringe mit Sauerstoff
oder Stickstoff als Heteroatom in Betracht. n = hier und
nachfolgend 1, 2 oder 3.

- 5 -

Bevorzugte Organohalogensilane sind insbesondere die Di- oder Organotrihalogensilane, vor allem die Chlorverbindungen oder Stoffgemische, wie sie bei der Herstellung dieser Verbindungen anfallen und die mehrere dieser Verbindungen enthalten können. Beispiele für im Sinne der Erfindung zur Modifizierung verwendete Behandlungsmittel sind Methylvinyldichlorsilan, Methyltrichlorsilan, Dimethyldichlorsilan, insbesondere Diphenyldichlorsilan. Aber auch Derivate von Kieselsäureanhydriden mit organischen Säuren sind im Rahmen der Erfindung verwendbar, also Verbindungen der allgemeinen Formel $R_nSiY_{4-n}$, worin R die obige Bedeutung hat und Y ein Carbonsäurerest, vorzugsweise einer niederen Carbonsäure, z.B. der Acetoxyrest ist. Zu den gemischten Säureanhydriden gehören auch solche Verbindungen, die gleichzeitig anorganische und organische Säurereste enthalten sowie mehrere Si-Atome, namentlich dann, wenn einer oder mehrere der Reste R zweiwertig sind. Eine weitere bevorzugte Gruppe von Modifizierungsmitteln sind Kieselsäureester und deren Derivate, z.B. Derivate der Organosilanole der allgemeinen Formel $R_nSi(OR^1)_{4-n}$, wobei R eine der obigen Bedeutungen und $R^1$ unabhängig davon eine der Bedeutungen von R haben kann. Vorzugsweise handelt es sich bei den Gruppen $OR^1$ um Methoxy- und/oder Äthoxygruppen. Auch höher kondensierte Verbindungen mit Si-O-Brücken fallen unter den Begriff der Organosilanol-Derivate.

Als Polyalkylene haben sich (insbesondere verzweigtes) Polyäthylen, insbesondere Materialien auf der Grundlage von Polypropylen (wie z.B. auch Polystyrol) erwiesen. Dabei können sowohl Homopolymerisate als auch Copolymerisate des Propylens, z.B. mit Styrol, als auch Mischungen dieser Polymerisate mit anderen Polymerisaten verwendet werden. Häufig enthalten die Polyalkylene, namentlich die Polypropylene als Photo- und Thermostabilisatoren sowie Gleitmittel geringe Mengen an Organo-Nickel-Komplexen und an Metallseifen, wie Verbindungen vom Typ der Ca-, Zn-, Sn-Stearate und Oktoate, welche bei der Modifizierung mit der reaktiven Siliziumverbindung katalytisch wirken. Bevorzugt liegen dabei die Materialien in Faserform, z.B. als Stapelfaser, Faservlies oder in Form von Fäden vor.

Die mit reaktiven Siliziumverbindungen modifizierten Polyalkylen-Verstärkermaterialien enthalten bisweilen noch reaktive Gruppen, die mit dem Polyalkylen nicht in Reaktion getreten sind. Dies können, z.B. bei Verwendung halogenhaltiger Siliziumverbindungen Halogengruppen, bei Verwendung von estergruppenhaltigen Siliziumverbindungen Alkoxy- oder Aryloxygruppen sein. Solche Verstärkungs-, bzw. Armierungsmaterialien dieser Art, welche dann einer wenigstens partiellen Hydrolyse ausgesetzt waren, haben sich im besonderen Maße bewährt. Die in derartigen Materialien vorhandenen wahrscheinlich Silanol-ähnlichen Reste zeigen möglicherweise aufgrund der vorhandenen OH-Gruppen in bevorzugtem Maße die Fähigkeit zur festen Bindung gegenüber der Matrix, sei es auf dem Wege chemischer Reaktion oder durch die Möglichkeit der Bildung von Wasserstoffbrücken. Dies gilt für alle, mit reaktiven Siliziumderivaten modifizierten Polyalkylen-Verstärkungsmaterialien und -Armierungsmaterialien, wenn sie noch reaktive, mit der Matrix reaktionsfähige Gruppen enthalten.

Als Arbeitshypothese und ohne Beschränkung der Erfindung auf eine derartige Hypothese wird angenommen, daß die Siliziumderivate bei den Polyalkylenen, z.B. bei Polyäthylen oder Polypropylen an tertiären Kohlenstoffatomen angeordnet sind, was z.B. bei isotaktischem Polypropylen ohne weiteres, bei Polyäthylen an Verzweigungsstelle möglich ist.

Gegenstand der Erfindung ist weiter ein Verfahren zur Herstellung von organischem Verstärkungs- und Armierungsmaterial auf Polyalkylengrundlage, insbesondere zur Herstellung der Materialien der vorgenannten Art, wobei man erfindungsgemäß das Polyalkylenmaterial mit reaktiven Siliziumverbindungen bei Raumtemperatur oder unter Erwärmen behandelt. Für die Durchführung dieser Reaktion können die zuvor genannten Siliziumverbindungen, also Siliziumverbindungen, welche zur Reaktion mit Polyalkylenen, bevorzugt an tertiären Kohlenstoffatomen befähigt sind, verwendet werden. Hierzu gehören vor allem gemischte Kieselsäureanhydride oder deren Derivate, insbesondere Organohalogensilane oder Kieselsäureester oder deren Derivate, insbesondere Organosilanolester. Namentlich können als Organohalogensilane niedrig Alkyl- und/oder Phenyl-chlorsilane und als Organosilanolester niedrig Alkyl- und/oder Phenylsilanolmethyl- und/oder äthylester oder ihre Kondensationsprodukte verwendet werden. Besonders brauchbar sind Methylvinyldichlorsilan, Methyltrichlorsilan, Dimethyldichlorsilan, insbesondere Diphenyldichlorsilan.

Die Reaktion wird vorzugsweise bei Raumtemperatur durchgeführt, wenn auch durch Erwärmen, beispielsweise auf Temperaturen von 25 bis 70°C die Reaktion gefördert werden kann. Sie kann an Polyalkylenen vorgenommen werden, die in anderer Raumform vorliegen als für die Verstärkung vorgesehen. So kann das Polyalkylenmaterial einer bestimmten Raumform, beispielsweise Polypropylenfolie, mit reaktiven Siliziumverbindungen umgesetzt und dann eine Überführung in die gewünschte
Raumform, z.B. Faserform erst nach der Reaktion vorgenommen
werden.

Der Ablauf der Reaktion wird durch Katalysatoren, namentlich Organometallverbindungen,wie Metallseifen und Metallkomplexe mit organischen Verbindungen gefördert. Als Metallseifen haben sich insbesondere die Ca-, Zn-, Sn-Seifen (als
Stearate, Octoate) bewährt. Beispiele für organische Metallkomplexe sind Nickel-dibutyldithiocarbamat, Nickel-2,2'-
thio-bis-(4-ditert.-octylphenolat), Nickel-bis-(3,5-ditert.-
butyl-4-hydroxy-benzylmonoäthyl-phosphonat). Die Modifizierung der Polyalkylenmaterialien erfolgt, insbesondere bei
Verwendung von Katalysatoren, häufig schon bei Raumtemperatur in relativ kurzer Zeit. Der Ablauf läßt sich im IR-Spektrum verfolgen. Bei Verwendung beispielsweise einer bereits
gereckten Polypropylenfolie, in welcher also die Linearketten eine gewisse Ordnung aufweisen, können neue Signale
beobachtet werden, welche optischen Dichroismus zeigen
(Goldgitterpolarisator). Dies weist eine Verbindungsbildung
aus.

Die Behandlung wird regelmäßig in inerten Lösungsmitteln,
wie beispielsweise Tetrachlorkohlenstoff, Schwefelkohlenstoff usw. durchgeführt. Die Materialien können in unterschiedlichster Weise, beispielsweise durch Einbringen in ein Behandlungsbad, durch Besprühen mit Lösungen der reaktiven Siliziumverbindung usw. durchgeführt werden.

Namentlich bei Verwendung von reaktiven Siliziumverbindungen, die nach der Reaktion mit dem Polyalkylenmaterial noch hydrolysierbare Substituenten enthalten, wie beispielsweise bei Verwendung von Organohalogensilanen oder Organosilanolestern kann eine nachfolgende Hydrolyse von Vorteil sein. Diese Hydrolyse erfolgt ohne weiteres schon wenn das Material mit der Luftfeuchtigkeit in Berührung kommt. Hierbei bilden sich wohl durch Kieselsäurederivate vom Silanoltyp modifizierte Polyalkylenmaterialien.

Gegenstand der Erfindung ist schließlich noch die Verwendung des zuvor genannten bzw. hergestellten Materials zur Verstärkung und Armierung mineralisch abbindender Massen bzw. Formlinge, insbesondere von Beton und Betonformlingen wie Betonsteinen unterschiedlichster Form. Gerade bei der Verstärkung bzw. Armierung mineralische Bindemittel enthaltender Massen mit organischen Materialien, bereitet die Benetzung und die feste Bindung zwischen dem organischen Verstärkungsmaterial und der mineralischen Matrix erhebliche Schwierigkeiten. In aller Regel werden bei solchen mineralischen Bindemittelsystemen wäßrige Zubereitungen verwendet, die besonders
bei Verstärkungs- und Armierungsmaterial auf Polyalkylengrundlage, wegen der "fettigen" Oberfläche dieser Materialien
wenig Neigung zu einer befriedigenden Benetzung zeigen. Wird
zudem noch kleinteiliges Material, wie Fasern, Schnitzel,
Fäden und dergleichen verwendet, so tritt die Gefahr einer
Klumpenbildung auf. Eine homogene Mischung, wie dies beispielsweise bei Verwendung von Asbest als Verstärkungsmaterial ohne weiteres möglich ist, ist dann kaum noch zu
erreichen.

Es hat sich nun gezeigt, daß bei Verwendung des erfindungsgemäß modifizierten Polyalkylen-Materials als Armierungsmittel in mineralisch abbindenden Systemen, insbesondere
Beton und in Betonformlingen neben einer leichten Benetzbarkeit eine außerordentlich feste Bindung zwischen Verstärkungsmaterial und Matrix erzielbar ist. Zu den mineralisch
abbindenden Systemen gehören Mörtel, wie beispielsweise
Kalkmörtel, Gipsmörtel, Zementmörtel, insbesondere aber die
hydraulisch abbindenden Systeme. Unter Beton im Sinne der
vorliegenden Erfindung wird das Gemenge eines hydraulischen
Bindemittels wie Zement mit Zuschlagstoffen verschiedenster
Art verstanden. Beispiele sind, in Abhängigkeit von der Art
der Zuschläge Leichtbeton, Schwerbeton, Hartbeton, Porenbeton und dergleichen. Zu Betonformlingen gehören Betonsteine, Rohre, Balken; Fußbodenplatten, Deckenträger, Wandteile usw. Besonders bewährt hat sich die Verwendung des
Verstärkungs- bzw. Armierungsmaterials der vorgenannten
Art zur Herstellung mineralisch abgebundener Formlinge,
insbesondere von Betonformlingen in Gegenwart von katalytischen Mengen radikalbildender oder ionisch reagierender
Katalysatoren. Als radikalbildende Katalysatoren kommen
insbesondere Peroxyverbindungen wie z.B. Bis-(4-Tert.-
Butyl-cyclohexyl-)-peroxidicarbonat oder Bis-(Cyclohexyl)-
peroxydicarbonat, als ionisch reagierende Katalysatoren z.B.
$AlCl_3$, $FeCl_3$, $ZnCl_2$ und dergleichen in Betracht. Die Katalysatormenge beträgt im allgemeinen 0,1 bis 2, vorzugsweise
0,5 bis 1 Gew.% Katalysator bezogen auf das modifizierte
Polyalkylenmaterial. Es hat sich gezeigt, daß die Verwendung
der erfindungsgemäßen Verstärkungs-, bzw. Armierungsmaterialien zur Herstellung von Formlingen in Gegenwart dieser
Katalysatoren, namentlich solcher bei Raumtemperatur bereits
anspringender Katalysatoren, zu einer extrem festen Bindung
zwischen Verstärkungs- und Armierungsmaterial und der umgebenden Matrix führt. Diese Wirkung tritt insbesondere
dann auf, wenn in dem das Polyalkylenmaterial modifizierenden Siliziumsubstituenten noch organisch reaktionsfähige Reste, insbesondere Reste mit Doppelbindungen enthalten sind. Beispiele hierfür sind Polyalkylenmaterialien, welche mit Dichlormethylvinylsilan, Dichlordiphenylsilan und dergleichen Verbindungen substituiert sind.

Das nachfolgende Beispiel dient der Erläuterung der Erfindung:

## B e i s p i e l

50 g Polypropylen (stabilisiert mit Metallseife und Organo-Nickel-komplex) werden mit einer Lösung von 5 g Diphenyldichlorsilan in 50 ml $CCl_4$ (oder in 50 ml 1.1.1.-Trichloräthan) besprüht. Ebenso kann auch eine Tauchbehandlung erfolgen. Das noch an den Fasern haftende überschüssige Lösungsmittel wird größtenteils zur Rückgewinnung abgenutscht und das restliche Lösungsmittel danach mittels Vakuum in einer Kühlfalle kondensiert. Die freien Halogengruppen der an das Polypropylen gebundenen Diphenylmonochlorsilaneinheiten können z.B. an feuchter Luft abhydrolisiert werden. Bei Zumischung zu Naßbeton findet eine entsprechende Hydrolyse zu Silanol statt unter Abbinden mit dem Zement.

Dazu werden 50 g der behandelten Fasern zu einer Mischung von 500 g Sand, 160 g Zement und 60 g Wasser gerührt. Die Festigkeit ist vor allem eine Funktion der Abbindezeit und des Mischungsverhältnisses. Weiterhin variiert sie mit der Menge des zugesetzten Organosiliciumhalogenids.

Formkörper aus mit dem modifizierten Polypropylen armierten Beton zeigen gegenüber Formkörpern aus mit üblichen Polypropylen armiertem Beton eine starke Erhöhung der Druck- und Zugfestigkeit. Eine weitere Erhöhung läßt sich noch erreichen, wenn man der Betonmischung noch 0,5 % eines radikalisch wirkenden Katalysators z.B. Bis-(4-tert.-Butylcyclohexyl)-peroxydicarbonat in Form einer 50%igen wäßrigen Lösung zumischt. Eine Haarrißbildung konnte an Formkörpern mit modifiziertem Polypropylen im Gegensatz zu Formkörpern ohne Armierung nicht gefunden werden.

Ende der Beschreibung

27. Okt. 1981

P a t e n t a n s p r ü c h e :

1. Organisches Verstärkungs- und Armierungsmaterial auf Polyalkylengrundlage, dadurch  g e k e n n z e i c h - n e t , daß das Polyalkylenmaterial durch einen Gehalt an organischen und/oder anorganischen oder anorganisch-organischen Si-IV-Verbindungen modifiziert ist.

2. Material gemäß Patentanspruch 1, dadurch  g e k e n n - z e i c h n e t , daß das Polyalkylenmaterial durch Behandlung mit reaktiven Siliziumverbindungen zumindest an seiner Oberfläche modifiziert ist.

3. Material gemäß Patentanspruch 1 oder 2, dadurch  g e - k e n n z e i c h n e t, daß das Polyalkylenmaterial durch Behandlung mit gemischten Kieselsäureanhydriden oder mit deren Derivaten, insbesondere mit Organohalogensilanen, vorzugsweise Organochlorsilanen modifiziert ist.

- 2 -

☎ (089) 988272
· 988273 ·
988274

Telegramme:
BERGSTAPFPATENT München
·· TELEX:

Bankkonten: Hypo-Bank München 4410122850
(BLZ 700200 11) Swift Code: HYPO DE MM
Bayer. Vereinsbank München 453100 (BLZ 70020270)

4. Material gemäß einem der vorhergehenden Patentansprüche, dadurch g e k e n n z e i c h n e t , daß das Poly-alkylenmaterial durch Behandlung mit Organo-Silizium-Di- und/oder Trihalogeniden modifiziert ist.

5. Material gemäß einem der vorhergehenden Patentansprüche, dadurch g e k e n n z e i c h n e t , daß das Poly-alkylenmaterial durch Behandlung mit Kieselsäureestern oder deren Derivaten, insbesondere mit Organosilanolestern, vorzugsweise niedriger aliphatischer Alkohole, modifiziert ist.

6. Material gemäß einem der vorhergehenden Patentansprüche, dadurch g e k e n n z e i c h n e t , daß das Poly-alkylenmaterial durch Behandlung mit Organohalogensilanen oder Organosilanolestern und zumindest partieller hydrolytischer Abspaltung der nicht-umgesetzten Halogen- und/oder Alkoxygruppen modifiziert ist.

7. Material gemäß einem der vorhergehenden Ansprüche, da-durch g e k e n n z e i c h n e t , daß als Polyal-kylenmaterial Polypropylen, insbesondere in Form von Endlos-Fasern, Stapelfasern, Faden, Faservlies und Flächengebilden enthalten ist.

8. Verfahren zur Herstellung von organischem Verstärkungs- und Armierungsmaterial auf Polyalkylengrundlage, insbesondere zur Herstellung des Materials gemäß einem der vorhergehenden Patentansprüche, dadurch g e k e n n - z e i c h n e t , daß man das Polyalkylenmaterial mit reaktiven Siliziumverbindungen bei Raumtemperatur oder unter Erwärmen behandelt.

9. Verfahren gemäß Patentanspruch 8, dadurch g e k e n n - z e i c h n e t , daß die Behandlung in Gegenwart von Katalysatoren durchgeführt wird.

10. Verfahren gemäß Patentanspruch 8 oder 9, dadurch g e k e n n z e i c h n e t , daß als Katalysatoren Organometallverbindungen, vorzugsweise Metallseifen verwendet werden.

11. Verfahren gemäß einem der Patentansprüche 8 bis 10, dadurch g e k e n n z e i c h n e t , daß die Behandlung in einem inerten Lösungsmittel erfolgt.

12. Verfahren gemäß einem der Patentansprüche 8 bis 11, dadurch g e k e n n z e i c h n e t , daß als reaktive Siliziumverbindung gemischte Kieselsäureanhydride verwendet werden oder deren Derivate, insbesondere Organohalogensilane oder Kieselsäureester oder deren Derivate, insbesondere Organosilanolester.

13. Verfahren gemäß einem der Patentansprüche 8 bis 12, dadurch g e k e n n z e i c h n e t , daß als Organohalogensilane niedrig Alkyl- und/oder Phenyl-chlorsilane und als Organosilanolester niedrig Alkyl- und/oder Phenylsilanolmethyl- und/oder äthylester oder deren Kondensationsprodukte verwendet werden.

14. Verfahren gemäß einem der Patentansprüche 7 bis 11, dadurch g e k e n n z e i c h n e t, daß das Reaktionsprodukt des Polyalkylenmaterials mit der reaktiven Siliziumverbindung, insbesondere mit Organohalogensilanen und/oder Organosilanolestern einer hydrolytischen Abspaltung der Halogen- bzw. Alkoholgruppen unterworfen wird.

15. Verwendung des Verstärkungs- oder Armierungsmaterials gemäß einem der vorhergehenden Patentansprüche zur Herstellung von mineralisch abbindenden Massen bzw. Formlingen, insbesondere von Beton und Betonformlingen.

16. Verwendung des Materials gemäß Patentanspruch 13 zur
    Herstellung von mineralisch abbindenden Formlingen,
    insbesondere von Betonformlingen in Gegenwart von
    radikalischen oder ionisch reagierenden Katalysatoren.

Beschreibung: